# EUROPEAN PATENT APPLICATION

(11) **EP 3 588 021 A1**
(43) Date of publication of application: **01.01.2020**
(21) Application number: 19181734.5
(22) Date of filing: 21.06.2019
(51) Int. Cl.: G01F 23/292, F16N 29/00, G01F 11/02

(54) **FILL LEVEL DETECTION IN PLUNGER FLUID CONTAINERS**

(30) Priority: 26.06.2018 NL 2021179
(71) Applicant: Eriks N.V., 3511 LK Utrecht (NL)
(72) Inventor: van der Stigchel, Paul Johan, 3511 LK Utrecht (NL)
(74) Representative: Brantsandpatents bvba

(57) **Abstract**

The current invention concerns a system for determining a fill level within a plunger fluid container having a container wall and being internally provided with a plunger, said system comprising (a) a housing forming a reception area for receiving the container wall of a plunger fluid container, and further provided with an abutment surface for abuttingly engaging said container wall, (b) at least one light emitter, (c) at least one light detector, and (d) a controller. In particular, said emitter and detector are arranged in juxtaposition, both pointing towards the aforementioned reception area, whereby the detector is configured for collecting backscattered light stemming from the emitter. The invention further discloses a method for determining fill levels within plunger fluid containers.

## Description

### Technical field

The invention pertains to the technical field of fill level detection. In particular, the invention relates to fill level detection within plunger-style fluid containers.

### Background

Various techniques for detecting fill levels in plunger fluid containers are known in the art.

As an example, US 8 281 656 B2 describes a medical cartridge that is provided with a fill level detection system. The cartridge has a tubular wall and an internal plunger. In particular, the tubular wall is provided with a plurality of fixed electrodes, while the plunger itself features one mobile electrode. The plunger position can thus be sensed, based upon capacitance measurements of the mobile electrode with respect to each of the fixed electrodes. An important disadvantage is that the electrodes are integrated within the cartridge. While the use of expensive cartridges having integrated fill level detection systems could be justified in demanding applications such as medical dosing systems, this may not so much be the case for other applications such as automatic lubricators. Moreover, a malfunction in the mobile electrode will endanger the operation of the detection system as a whole.

WO 2016 036 574 A1 equally discloses a system for determining the position of a plunger within a medical fluid container. To this end, the system comprises a light source emitting light along and through a waveguide protuberance that projects radially outward from the container wall. A portion of this light is reflected off the plunger surface, and can be detected sideways. The plunger position is thereby revealed. A malfunction of the light source may again threaten the operation of the system as a whole. Furthermore, this design at least requires a fluid container that is specifically adapted for cooperation with the detection system, e.g. requiring a waveguide protuberance. The application of such designs in other fields may raise important compatibility issues, since such protuberances are generally not present in plunger fluid containers.

US 6 113 578 A further describes a device for determining liquid quantities in medical syringes, through comparison of optical response patterns to calibration data stored in the device. US 2015 379 900 A1 discloses a device for monitoring the position of a plunger member within a medical syringe, on the basis of light transmitted through said plunger member. Lastly, US 2018 064 881 A1 describes a system for detecting a volume remaining in a medical drug delivery device. In particular, electromagnetic radiation transmitted through the drug container is detected, using a plurality of optical sensors.

The abovementioned systems are specifically designed for medical use; they are generally not applicable to fields other than the medical field, for instance to the field of automatic lubrication. They are not designed for dusty and/or moist environments for one thing, and they do not readily allow for a robust and durable implementation. Moreover, the above detections systems are especially adapted to and/or fully integrated with the fluid container. Additionally, some of these systems are only applicable to transparent fluids, and more generally these systems cannot be used regardless of the fluid employed.

For industrial applications, time and human resource constraints, and sometimes the physical location of installations often make it impractical to perform a manual lubrication. Production cycles, machine availability, and manpower availability therefore dictate the intervals at which machinery is lubricated. Automatic lubricators may address this problem. For instance, US 8 844 681 B2 describes a lubrication device. It is provided with an infrared optical sensor for sensing the lubricant level when submersed in the lubricant. However, the same fill level detection system cannot readily be applied to any kind of automatic lubricator, for instance to one featuring a plunger-type lubricant container.

The present invention is aimed at resolving at least one of the above-mentioned problems.

### Summary of the invention

In a first aspect, the invention concerns a system according to claim 1, for determining a fill level within a plunger fluid container. Latter system comprises (a) a housing forming a reception area for receiving the container wall of a plunger fluid container, said reception area being provided with an abutment surface for abuttingly engaging said container wall, (b) at least one light emitter, (c) at least one light detector, and (d) a controller. In particular, said emitter and detector are arranged in juxtaposition, both pointing towards the aforementioned reception area, said detector being configured for collecting backscattered light stemming from the emitter.

In an engaged configuration of the system, light is headed from the activated emitter towards the container wall. Due to its optical transparency however, at least a part of the light passes through. Now further depending on the longitudinal plunger position, the backscattering response as collected by the detector will differ. Information concerning the longitudinal plunger position may thus be derived. An advantage of employing a backscattering characteristic, rather than a transmission characteristic is that the system can be applied regardless of the fluid employed. In particular, the fluid does not have to be transparent. Furthermore, the system dimensions can be reduced, and its mounting can be simplified; it suffices that the system connects sideways to the container.

In a further embodiment according to claim 2, a plurality of emitters and a plurality of detectors is provided, arranged in juxtaposed columns. Preferably, they are pairwise arranged. In yet a further embodiment according to claim 3, the controller is configured for separately controlling the emitters. Consequently, more accurate results can be obtained, since stray light originating from other emitters can be excluded.

In further or alternative embodiment, the system is configured for determining a fill level within a plunger lubricant container of an automatic lubrication system. Optionally, such the plunger fluid container (being a lubricant container) may be comprised by the system. In a further or alternative embodiment, the system includes a plunger lubricant container for automatic lubrication, said lubricant container being the aforementioned plunger fluid container.

In a second aspect, the invention concerns a method according to claim 9, for determining a fill level within a plunger fluid container.

### Description of figures

**Figure 1** gives an enlarged view on an automatic lubricator, further provided with a fill level detection system according to an embodiment of the invention.
**Figure 2** shows a longitudinal cut of a fluid container provided with a fill level detection system according to another embodiment.
**Figures 3A-D** show transverse cuts of fluid containers provided with fill level detection systems according to four possible embodiments.
**Figure 4** schematically represents a fill level detection system according to an embodiment of the invention.
**Figures 5A and 5B** illustrate the assessment of a longitudinal plunger position according to an embodiment of the invention.
**Figure 6A** gives an exploded view on an automatic lubricator, further provided with a fill level detection system according to an embodiment of the invention.
**Figure 6B** gives a perspective view on the measurement module of figure 6A, in a non-engaged configuration.

### Detailed description of the invention

The present invention concerns a system and method for determining fill levels within piston fluid containers.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refer to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

"Light", and any term related thereto (e.g. light emitter, light detector), may generally relate to any kind of electromagnetic radiation. Optionally latter radiation comprises infrared wavelengths, visible wavelengths, and/or ultraviolet wavelengths. "Transparency", and any term derived therefrom indicates that the relevant substances and/or structures are transparent to some degree, for at least a part of the wavelengths involved/emitted. "Backscattered light", as used herein, may comprise both diffuse reflections and specular reflections.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

In a first aspect, the invention concerns a system for determining a fill level within a plunger fluid container, which container has a container wall comprising an at least partly transparent material and containing a fluid, and which container is internally provided with a plunger and means for slidably advancing said plunger towards an outlet end of the container, thereby dispensing the fluid from the container, the system comprising (a) a housing forming a reception area for receiving the container wall of a plunger fluid container, said reception area being provided with an abutment surface for abuttingly engaging said container wall, (b) at least one light emitter, (c) at least one light detector, and (d) a controller. In particular, said emitter and detector are arranged in juxtaposition, both pointing towards the aforementioned reception area, whereby the detector is configured for collecting backscattered light stemming from the emitter.

A "plunger fluid container" is a container having a container wall for enclosing fluids, and stretching into a longitudinal direction. An internal plunger is further provided, longitudinally advanceable within said wall enclosure. Preferably said plunger has a plunger circumference that is in fluid-tight engagement with the interior surface of the container wall. Typically there is a gas-filled space above, up to the rear end, and a fluid-filled space below, up to the outlet end. Advancing the plunger towards the outlet end then corresponds to forcing the fluid through an outlet opening provided therein. The longitudinal position of the plunger thus determines the fill level, i.e. the amount of fluid left in the container. "Plunger" herein refers to the plunger head. Such plunger heads are only optionally provided with a plunger rod.

"Determining and/or detecting a fill level", as used herein, means that at least some information concerning the amount of fluid left in the container can be deduced. However, in some embodiments this may merely consist of assessing whether or not the fluid container is empty.

The fill level detection system comprises a housing defining a reception area for receiving the container wall of a plunger fluid container. Latter reception area is provided with an abutment surface. Plunger fluid containers typically have curved wall portions, e.g. cylindrical wall portions. The abutments surface is thus preferably curved, as to connect to such wall portions. It may for instance comprise a negative cylinder shape. However, this is not necessarily the case. The reception area may comprise an opening surrounded by an edge portion, latter edge portion forming an abutment surface.

The reception area may or may not be provided with a reception opening surrounded by the abutment surface. In a further embodiment, the (peripheral) abutment surface may or may not be adapted for being abuttingly arranged against the container wall. In a further embodiment, the emitter and detector may therein be arranged in juxtaposition, both pointing towards said reception opening. The emitter and detector are preferably arranged for pointing sideways / into directions substantially perpendicular to a longitudinal axis of the plunger fluid container.

In an engaged configuration of the system with a container wall, the light emitter and detector are pointing towards the container wall. When activating the emitter, light is thus headed towards the container wall. Due to its optical transparency however, at least a part of the light passes through, thereby reacting with substances and/or structures behind, lying within the container. Depending on the longitudinal plunger position, these structures may include a gas, a fluid, and/or the plunger, each having different optical characteristics. Thus depending on the longitudinal plunger position, the backscattering response will differ. Latter backscattering response (comprising light originally stemming from the activated emitter) is collected by the detector. It is indicative of the substances/structures within the container, substantially aligned with the detector and emitter. Preferably, the emitter and detector have about the same longitudinal position. Preferably, the emitter and detector are oriented transversally, i.e. orthogonal to the longitudinal direction of the container and system.

An advantage of employing a backscattering characteristic, rather than a transmission characteristic is that the system can be applied regardless of the fluid employed. In particular, the fluid does not have to be transparent. Furthermore, the system dimensions can be reduced, and its mounting can be simplified, since it suffices to approach the fluid container from one side.

Preferably, the system is configured for directly detecting the plunger. Indeed, any plunger fluid container always comprises a plunger, as set out above. Moreover this plunger is in tight contact with the inner surface of the container wall, minimizing the distance to emitter and detector. Furthermore its appearance, and in particular the appearance of the plunger circumference is independent of the fluid. Plunger circumferences often comprise a rubber sealant, which is highly absorbent for visible wavelengths and which can be highly reflective for infrared wavelengths. Alternatively, the plunger may comprise a colored structure. In general the plunger preferably comprises a pigment that is selective for the backscattering light response.

In a further or alternative embodiment, the emitters and/or detectors comprise LEDs. In addition to being used as a photodiode light emitter, a LED can indeed be used as a photodiode light detector, where it is sensitive to wavelengths equal to or shorter than its predominant emission wavelengths. Optionally, the detector LEDs comprise a colored encapsulation, as to partly absorb stray light and/or environmental light. Light emission may be infrared, white and/or colored light, such as red, blue or green light, as long as it can be detected by the light detectors. The latter are chosen accordingly. Of course, other types of light emitters and/or light detectors can be employed.

In a non-limiting embodiment, the light emitter is a spectrally narrow light emitter (for instance having a spectral range with a FWHM of maximally 400 nm, preferably maximally 200 nm, more preferably maximally 100 nm). The plunger may further comprise a pigment falling within said spectral range, such that a part of the emitted light is absorbed at the plunger circumference. When the plunger is substantially aligned with any such detectors, the backscattering response will be lower. However, the plunger circumference may alternatively feature high reflectance values, within the spectral range of the emitter. A part of the emitted light is then reflected off the plunger circumference. In contrast to the above, alignment of the plunger with a detector will then result in an increased backscattering response.

In a possible embodiment, the emitter is a near infrared emitter, and the plunger comprises a polymer that has increased reflectance values (of say more than 50%), within the near infrared. In another, possible embodiment, the emitter is a red LED emitter, and the plunger circumference may show either an absorbent or a reflective behavior. Red LEDs are preferred, since they have a low cost. Of course, the invention is in no way limited to any of these. Preferably, the detector is spectrally matched to the emitter, in the sense that the emission spectrum of the emitter at least partly overlaps the detection spectrum of the detector.

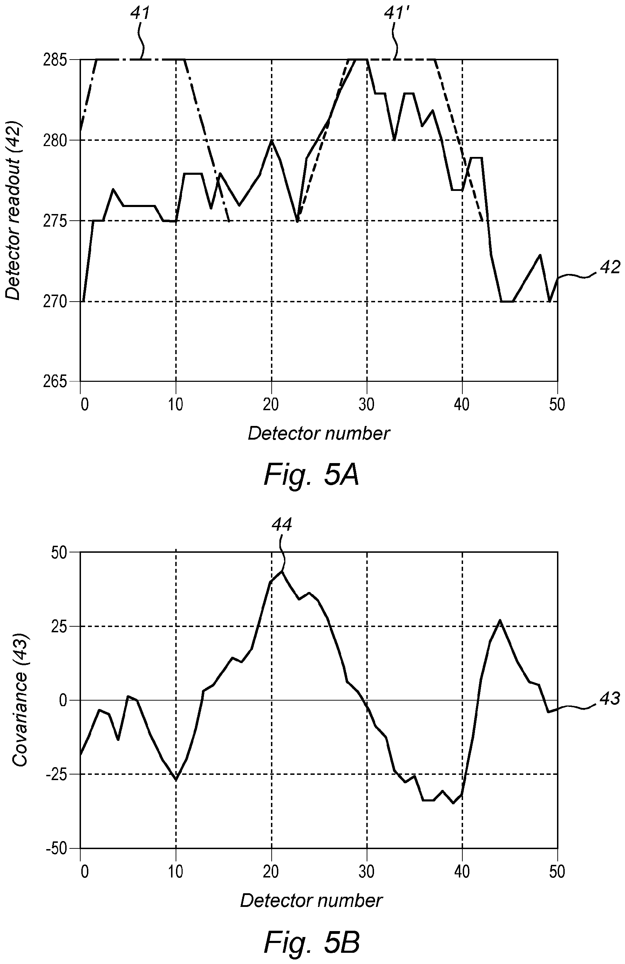

In a further or alternative embodiment, the system comprises a plurality of emitters and a plurality of detectors, which emitters and detectors are arranged in juxtaposed columns. Preferably, they are pairwise arranged. The system thereby comprises a linear array of light emitters, and a linear array of light detectors, sized to axially extend along at least the portion of the container wall length at which the longitudinal position of the plunger is desired to be detected. When having collected the light response at two or more of these locations, a backscattering response pattern can be constructed. This may allow for actually determining the longitudinal position of the plunger. Reference is made to figure 5A and its corresponding description.

In a further or alternative embodiment, the controller is configured for separately controlling the emitters. Consequently, more accurate results can be obtained. In one possible embodiment, all pairs of emitters and detectors are sequentially activated. Each detector will thus mainly detect light originating from the emitter adjacent thereto. Moreover, latter emitter mainly illuminates the structures to which it is directly aligned, implying a higher selectivity. In particular, the collection of stray light originating from other emitters is excluded. According to a similar argumentation, this design also has important advantages over designs featuring only one main emitter, and a plurality of detectors for collecting light responses at different locations. In each case, the above methodology allows for generating a backscattering response pattern that takes the form of a one-dimensional array. Information concerning the longitudinal position of the plunger can be deduced. In another, possible embodiment, the backscattering responses of each individual emitter are detected at all detector locations. Using this information, a two-dimensional backscattering response matrix can be constructed. Since more data is gathered, a higher accuracy can be achieved in determining the longitudinal plunger position. However, this comes at the cost of a more complex methodology, and a more intense communication between the controller, the detectors, and the emitters.

In a further or alternative embodiment, the system includes a plunger lubricant container for automatic lubrication, said lubricant container being the aforementioned plunger fluid container.

Plunger lubricant containers typically have a transparent container wall for visual inspection. Moreover, lubricant grease and/or oil is typically not transparent. In any case, the large dimensions of such containers do generally not allow for a highly accurate fill level detection based on transparency measurements. Furthermore, plunger lubricant containers do often not comprise a plunger rod. They rather feature other advancing means such as a spring means and/or chemical substances reacting to form an expanding gas. Such advancing means do not need an electrical connection. Of course, the invention is equally applicable to plunger fluid/lubricant containers that do feature plunger rods. Advantageously, the present invention provides a fill level detection based on the direct backscattering response of the plunger (i.e. the plunger head) itself, independently of the type of grease employed. Later element is always present in plunger lubricant containers. Quite often, automatic lubrication systems are provided on locations that are difficult to reach. It is thus advantageous to provide them with an automatic fill level detection system.

In a further or alternative embodiment, the system further comprises a fastening means for mounting the housing onto the container. This allows for providing a fill level detection system that can be directly mounted onto an existing fluid container, e.g. a lubricant container. Preferably, the fastening means are adapted for laterally mounting said housing against said container wall.

Said fastening means may comprise clamping means. The fastening means may comprise mounting clamps and straps. Preferably the housing is clamped from one side onto the container wall. Optionally, alignment means are further comprised, for a proper longitudinal alignment of the emitter and detector arrays with the container. Such means could be comprised by the system and/or by the fluid container. Preferably, said fastening means ore at least capable of establishing a free suspension/support of the detector system from the container wall.

In a further or alternative embodiment, the abutment surface comprises a sealing means. For instance the emitters, detectors, and the controller are provided in an internal chamber within said housing, shielded from environment light, dust, and/or moist. Such designs may be advantageous for dusty and/or moist environments. Optionally, the reception area forms an open mouth.

In a further or alternative embodiment, the system further comprises a temperature sensor. This is particularly important for temperature-dependent detectors (e.g. LEDs), when used outdoors and/or in environments lacking a stable temperature. Temperature data can be employed for applying a correction to the collected light response.

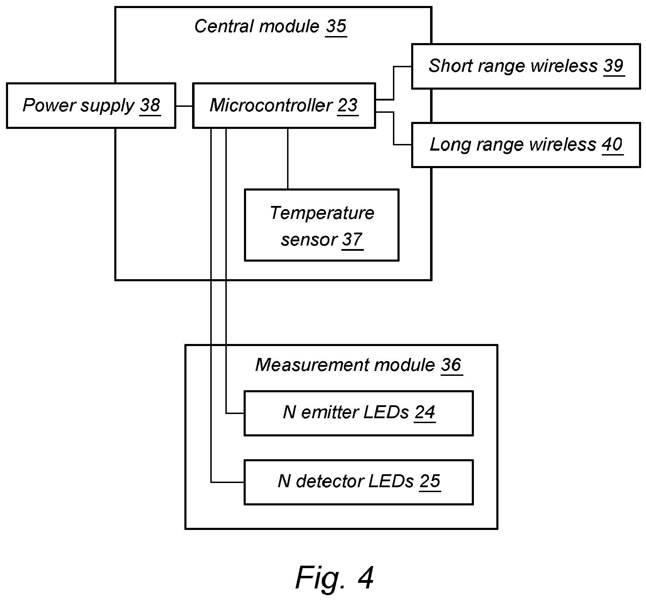

In a further or alternative embodiment, the system comprises a general module and a measurement module. The general module preferably comprises general components such as the controller. The measurement module preferably comprises components specific to the fluid container, such as detector and emitter arrays. Possible advantages of a modular design are mentioned in the description of figure 4.

In a second aspect, the invention concerns a method for determining a fill level within a plunger fluid container, which container has an at least partly transparent container wall containing a fluid, and which container is internally provided with a plunger, the method comprising (a) emitting light from an external emitter location towards the container wall, (b) collecting a light response thereof at one or more, external detector locations, and (c) assessing from said light response or responses whether the plunger is substantially aligned with said detector and/or emitter locations. In particular, the emitter and detector locations are arranged in juxtaposition, whereby said light responses comprise backscattered light stemming from the emitter. Preferably, said light responses mainly comprise backscattered light stemming from the emitter. Preferably, the system according to the first aspect is configured for performing the present method. Some of the advantages may thus be repeated.

In a further or alternative embodiment, light is emitted from a plurality of emitter locations, thereby collecting backscattered light at a plurality of detector locations juxtaposed thereto. Some of the above-mentioned advantages thereby equally apply.

In a further or alternative embodiment, a fill level is determined through correlation with a plunger characteristic. One possible embodiment is described in the context of figures 5A and 5B. An advantage is that the fill level can be determined more accurately. Preferably, latter plunger characteristic is available to the controller of the system according to first aspect of the invention; e.g. it is saved into a data storage component of the system.

In a further or alternative embodiment, light is sequentially emitted from a plurality of separate emitter locations, and/or sequentially collected at a plurality of separate detector locations. An advantage is that only one communication line in between the general and measurement modules is thereby required. In case of lubrication systems, controlling the fill level once a day largely suffices, such that a high time resolution has limited importance. It suffices to regularly activate the emitters and detectors, during very short time slots only. This way, in case the system is fed by means of a battery pack, the lifetime of the battery can be increased.

In a further or alternative embodiment, a background measurement is performed. This way, relatively slow external influences (day-night rhythm, the change of seasons) can be accounted for. For instance a pre-measurement and post-measurement may be performed and averaged, which values are then subtracted from the light response that is actually collected.

In a further or alternative embodiment, a fill level is determined, based upon an analogue value of said light response. This allows for obtaining resolutions beyond the separation of the emitters and detectors, as explained in the context of figures 5A and 5B.

In a further or alternative embodiment, the container is a plunger lubricant container for automatic lubrication. The above advantages can thus be repeated.

In a further or alternative embodiment, a fill level assessment is wirelessly sent to a server and/or to a mobile user device. This is particularly advantageous for fill level detection of automatic lubrications systems on locations that are hard to reach.

The invention is now further described by the following, non-limiting examples and figures which further illustrate the invention, and which are not intended to, nor should they be interpreted to, limit the scope of the invention.

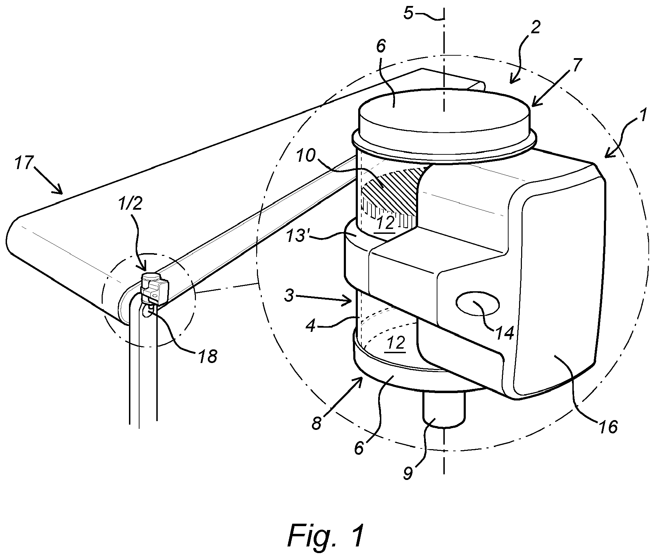

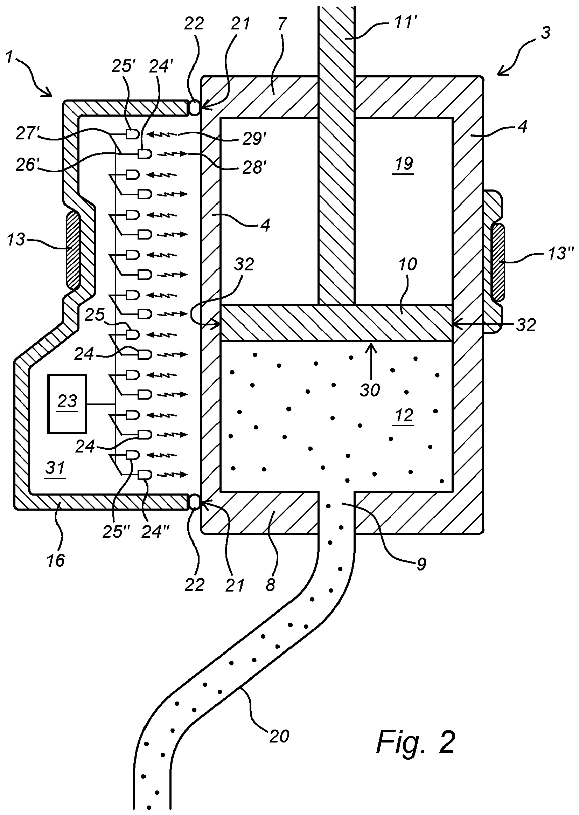

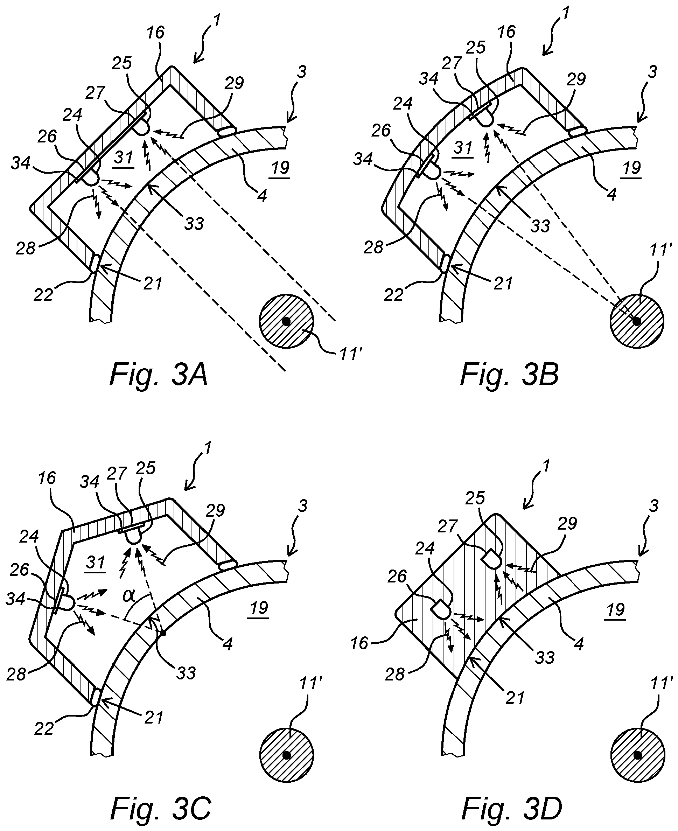

**Figure 1** gives an enlarged view on an automatic lubricator **2,** further provided with a fill level detection system **1** according to an embodiment of the invention. The lubricator **2** comprises a fluid container **3,** more specifically a lubricant container **3** having a transparent, tubular container wall **4** that stretches into the longitudinal direction **5** (presently coinciding with the vertical direction). The fluid container **3** is further provided with two caps **6:** a closed cap **6** at its rear end **7** (top) and a cap **6** featuring an outlet opening **9** at its outlet end **8** (bottom). The fluid container **3** is internally provided with a plunger **10,** and with advancing means **11** (not shown) for slidably advancing said plunger **10** towards the outlet end **8,** thereby forcing the lubricant **12** through the outlet opening **9.** These and other lubricator **2** designs are known in the field of lubrication. Typically, automatic lubricators **2** are not provided with a plunger rod **11'** that protrudes from their rear end **7,** proportionally to the amount of lubricant **12** still present in the lubricant container **3.** Rather, an internal spring means and/or chemical substances reacting to form an expanding gas are provided as an advancing means **11.** As such, the overall size of the automatic lubricator **2** is decreased. The latter is important for lubricant **12** provision in cramped locations and/or locations that are difficult to reach. Of course, the invention is equally applicable to plunger fluid containers **3** that do have plunger rods **11',** as shown in the embodiments of figures 2 and 3A-D below.

The fill level detection system **1** presently allows for assessing the longitudinal position of the plunger **10** within the container **3,** and thus for determining the amount of lubricant left in the container **3** (i.e. the fill level). As is shown in the figure, the system **1** comprises a housing **16,** and a mounting clamp **13'** by which said housing **16** is mechanically clamped from one side against the container wall **4.** Fastening holes **14** are further provided, for performing the required clamping action by means of fasteners **15** (e.g. screws). Both the housing **16** and the mounting clamp **13'** comprise a semicircular profile that is substantially complementary the cylindrical exterior surface of the container wall **4.**

Automatic lubricators **2** of this kind can for instance connect to bearings **18** of conveyor belts **17,** as is shown in the background. The fill level detection system **1** may be suitable for cooperation with existing lubricators **2** having a plunger lubricant container **3.** Alternatively, the system **1** and container **3** are sold as a kit, optionally in their engaged configuration. Still alternatively, the system **1** and container **3** form one integral piece. However, preferably they are separate pieces.

**Figure 2** shows a longitudinal cut of a fluid container **3** provided with a fill level detection system **1** according to another embodiment. Only optionally, the fluid container **3** is a lubricant container **3** for cooperation with an automatic lubricator **2,** but this is not necessarily so. In any case, the container **3** generally comprises an at least partly transparent container wall **4** enclosing an inner volume **19.** Within this volume **19,** a plunger **10** and plunger rod **11'** are provided, the latter for advancing said plunger **10** towards the outlet end **8** of the container **3.** In doing so, any fluid **12** contained between the plunger surface **30** and the outlet end **8** is forced through the outlet opening **9,** along the outlet hose **20.**

The fluid container **3** and the fill level detection system **1** are depicted in an engaged configuration. The system **1** comprises a housing **16** enclosing an inner chamber **31** and defining a reception area **33** by which the container wall **4** is received. The reception area **33** is further provided with an abutment surface **21** forming a circumferential mouth that encloses the otherwise open reception area **33.** Latter reception area **33** thus provides a direct and open connection of the inner chamber **31** to the container wall **4.** The housing **16** itself may further provide shielding from environmental light, dust, and/or moisture. Optionally it comprises an opaque material. Optionally the abutment surface **21** is provided with a sealing means **22** (e.g. glue, or an elastomeric material). Moreover, the housing **16** is mounted and clamped from one side onto and against the container wall **4,** by means of a fastening means such as a strap **13".**

The housing **16** is internally provided with a controller **23** in communication with a plurality of light emitters **24** (at corresponding emitter locations **26**), and with a plurality of light detectors **25** (at corresponding detector locations **27**). The emitters **24** and detectors **25** are provided within the housing **16,** but external to the container **3.** Emitters **24** are arranged in a first column, while detectors **25** are arranged in a second column, substantially juxtaposed (=adjacent) to the first - which is schematically shown. Mutually adjacent emitters **24** and detectors **25** are thus pairwise arranged, at locations **26, 27** having the same longitudinal position. They **24, 25** all point towards an open part of the reception area **33,** and thus directly towards the container wall **4.** As such, the detectors **25** are able to collect backscattered light **29** originally emitted by the emitters **24.**

Preferably, the emitters **24** are separately operated in a sequential order. Each time, a backscattering response (comprising backscattered light **29**) is recorded by means of a pairwise corresponding detector **25.** For example in case of the uppermost emitter **24',** light **28'** is first emitted from its emitter location **26'.** Emitted light **28'** may interact with the container wall **4.** However, because the latter is transparent, at least a part of the light **28'** will pass through said wall **4,** further interacting with the substances and/or structures behind. The aforementioned light response **29** will thus depend on the nature of these substances and structures, and in particular on the nature of those substances and structures substantially aligned with the longitudinal emitter **24'** and detector **25'** locations **26', 27'.** Information concerning the fill level may consequently be derived. For instance, in a completely filled container **3,** the plunger **10** will be substantially aligned with the uppermost emitter **24'** and detector **25'.** The amount of backscattered light **29',** collected by the uppermost detector **25'** will thus in a completely filled state be affected by the reflective properties of the plunger circumference **32.** More generally this is repeated for each pair of an emitter **24** and detector **25,** thereby collecting a backscattering response pattern **42** as a function of the longitudinal position.

Rather than measuring an amount of backscattered light (i.e. an intensity), one may additionally or alternatively measure a frequency spectrum, a phase shift, a time delay, and/or polarization. Suitable emitters, detectors and/or configurations are chosen correspondingly.

In an embodiment alternative to the one shown in figure 2, only the lowermost pair of detector **24"** and emitter **25"** is provided. This allows for detecting a possible alignment with the plunger **10,** corresponding to an empty or near-empty piston fluid container **3.**

**Figures 3A-D** show transverse cuts of fluid containers **3** provided with fill level detection systems **1** according to four possible embodiments. In any case the container walls **4** all have circular profiles. A plunger rod **11'** is further shown, for advancing the plunger **10** into the figure, towards an outlet end **8** of the container **3.** Moreover each cut reveals a pair of one emitter **24** and one detector **25.** Both point towards the reception area **33,** and towards the container wall **4.** They are adjacent to each other and they have the same longitudinal position. This allows for assessing whether the plunger **10** is substantially in line with latter position, which is presently not the case.

In figures 3A-C, the housing **16** encloses a chamber **31** into which the emitter(s) **24** and detector(s) **25** are shielded from dust and moisture. The corresponding abutment surfaces **21** comprise sealing means. Any of these embodiments may simultaneously correspond to the one of figure 2. In figure 3A, the emitter **24** and detector **25** are provided onto a single, flat substrate **34.** This has important advantages in fabrication and assembling. Moreover, the exact direction into which the emitter **24** and detector **25** are pointing is not so important if diffuse reflections (=scattering), rather specular reflections are primarily involved. The same is true if at least one of the emitter **24** and detector **25** is not highly directive. In figure 3B, the emitter **24** and detector **25** are directed radially, towards the longitudinal axis of the fluid container **3.** In figure 3C, the emitter **24** and detector **25** are directed more or less such that light reflected off the inner surface of the container wall **4** is headed back towards the detector **25,** in case of specular reflection. Optionally the refractive indices of the materials involved are taken into account for determining the required angle. Such designs may for instance be advantageous when providing the plunger circumference **32** with a reflective coating. In figure 3D, the emitter **24** and detector **25** are both embedded into a single, transparent material matrix. Latter matrix has a curved abutment surface **33,** complementary to the container wall **4.** Proper choice of the refractive indices involved may be advantageous for fill level detection.

**Figure 4** schematically represents a fill level detection system **1** according to an embodiment of the invention. The system **1** is a modular system **1** in that it comprises a general module **35** and a measurement module **36.** The former is also indicated as the "central module" **35.** The measurement module **36,** on the one hand, comprises a plurality of emitters **24** and detectors **25** for collecting measurement values. The general or central module **35,** on the other hand, handles further processing of these values in determining fill levels. It further manages any communication with the outside world.

All structures specific for the fluid container **3** are thus accommodated within a separate "measurement module" **36.** Latter module **36** may be specifically adapted for cooperation with one type of fluid containers **3,** especially with regard to the number of emitters **24** and detectors **25** provided, and with regard to the longitudinal extension of this module **36.** Indeed, higher fluid containers **3** may require higher measurement modules **36,** featuring more emitters **24** and detectors **25.** Furthermore, the measurement module **36** may be provided in a housing **16** that has a complementary form to the outer surface of the container wall **4.** In any case, different types of measurement modules **36** can nevertheless be coupled to the same type of general module **35,** which is advantageous for production and logistics.

The measurement module **36** as shown in figure 4 comprises an array of N emitter LEDs **24** and an array of N detector LEDs **25.** Preferably said arrays are arranged as columns along the longitudinal direction. The length of these columns, as well as the number of LEDs and their mutual locations are chosen according to the requirements of the situation at hand. The module **36** comprises shift registers for sequentially activating the emitter LEDs **24.** The corresponding detector LEDs **25** are read by first biasing them such that the charges present therein are removed. Subsequently, due to a backscattered light response **29,** there is a built-up of (photoexcited) charge, causing their voltage to increase. Latter voltage then provides an analogue value that allows for assessing the backscattered light **29** intensity. Relevant voltage values are passed back to the general module **35** via a multiplexer.

The general module **35** comprises a microcontroller **23** in communication with the emitters **24** and detectors **25** of the measurement module **36.** A power supply **38** (e.g. a battery pack or solar cell) is further provided, and a temperature sensor **37** is included, such that temperature dependency of the emitter **24** and detector **25** LEDs can be corrected for. The general module **35** further comprises a short range wireless communication module **39,** for instance a Bluetooth low energy (BLE) module, but not limited thereto. This allows for performing software updates. The general module **35** equally comprises a long range wireless communication module **40;** non-limiting examples include a LoRaWAN module and/or a Sigfox module. This allows for sending status updates towards central servers and/or mobile user devices, over a range of several hundreds of meters to several kilometers. Such status updates are sent at regular time intervals. They may include a software version, a fill level, a temperature, a battery level, and/or any combination thereof.

The overall accuracy of the system **1** depends on the distance in between the detectors **25,** on the ADC resolution, and on the accuracy of the microcontroller **23** timer.

**Figures 5A and 5B** illustrate the assessment of a longitudinal plunger **10** position according to an embodiment of the invention.

Figure 5A represents a backscattering response pattern **42,** as a function of the detector number (going up to 50). Moreover, simplified plunger characteristics **41, 41'** are added, for two possible locations of the plunger **10.** The second **41'** is shifted with respect to the first **41,** corresponding to a different longitudinal position of the plunger **10.** In any case the plunger characteristics **41** feature a rising flank, a plateau and a falling flank. This corresponds to a plunger circumference **32** having a high reflectivity, with increasing responses for detector locations **27** approaching the plunger **10,** and with a maximum response for detectors locations **25** that are substantially aligned with the plunger **10.** A rubber sealing **22,** for instance, features high reflectivity values in infrared.

Figure 5B shows the result of further applying a covariance algorithm to the backscattering response pattern **42** and the plunger characteristics **41.** In case the backscattering response pattern **42** and (a shifted version of) the plunger characteristic **41** show a similar behavior, their covariance **43** will be high. An absolute covariance maximum **44** is thus obtained for optimally shifted plunger characteristics **41'.** This allows for assessing the plunger **10** position. Covariance maxima **44** may be obtained via curve fitting. Since a maximum **44** may fall in between two detector locations **27,** a resolution can be obtained that is superior to the detector **25** separation.

More complex plunger characteristics **41** can be imagined. For instance, the plunger characteristic **41** may comprise a pattern of maxima and minima, corresponding to a pattern of areas on the plunger circumference **32** having maximal and minimal reflectivity, superposed to one another, along the longitudinal direction. A disadvantage is that the plunger **10** then needs to be adapted to the system.

In an alternative strategy, one may simply look for a maximal or minimal backscattering response, in case the plunger circumference **32** shows a high respectively low reflectivity value. Running average filters and/or low pass filters may be applied in the process.

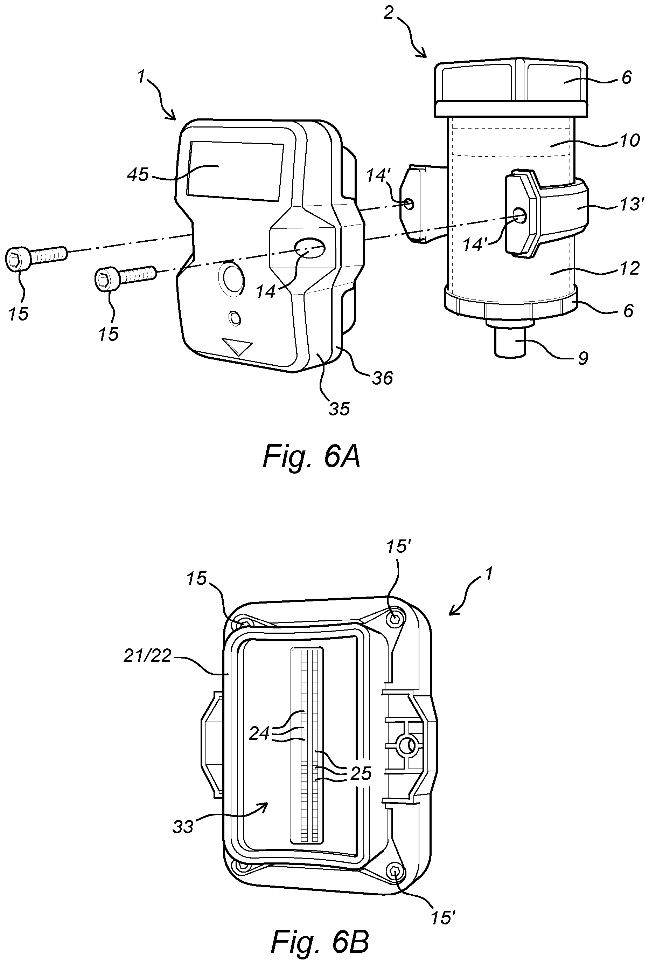

**Figure 6A** gives an exploded view on an automatic lubricator **2,** further provided with a fill level detection system **1** according to an embodiment of the invention. The device comprises a mounting clamp **13'** for being mounted onto the fluid container **3** via fasteners **15,** through a set of corresponding fastening holes **14.** A general module **35** and a measurement module **36** can be discerned. In particular the reception area **33** does not fully enclose the fluid container **3;** it is rather clamped against the container **3** form one side.

**Figure 6B** gives a perspective view on the measurement module **36** of figure 6A, in a non-engaged configuration (i.e. demounted from the fluid container **3**). The general module **35** is still connected to the back of the measurement module **36,** by means of fasteners **15';** it has a separate housing.

The front side of the measurement module features a column of emitters **24** and a column of detectors **25,** with a separation of 1.25 mm. The distance in between the columns amounts to about 5 mm. The emitters **24** and detectors **25** are provided onto a single substrate. 48 individually controllable LEDs are used as emitters **24,** emitting at a central wavelength of about 650 nm. The detectors **25** comprise 48 analogue detectors **25,** capable of detecting backscattered light **29** originally stemming from an emitter **24.** The reception area **33** is enclosed by an abutment surface **21,** curved to the cylindrical form of the lubricant container **3.** It is further provided with a sealing means **22.** As such, the system **1** is a separate device that can be mounted to any lubricant container **3** of appropriate dimensions. The present lubrication container **3** has a longitudinal length of about 74 cm. The plunger **10** position can be assessed with an accuracy below 0,25 mm. The system **1** has an international protection rating corresponding to at least IP55.

The numbered elements on the figures are:
- 1.: Detection system
- 2.: Lubricator
- 3.: Fluid container
- 4.: Container wall
- 5.: Longitudinal direction
- 6.: Cap
- 7.: Rear end
- 8.: Outlet end
- 9.: Outlet opening
- 10.: Plunger
- 11.: Advancing means
- 12.: Fluid
- 13.: Fastening means
- 14.: Fastening holes
- 15.: Fasteners
- 16.: Housing
- 17.: Conveyor belt
- 18.: Bearing
- 19.: Inner volume
- 20.: Outlet hose
- 21.: Abutment surface
- 22.: Sealing means
- 23.: Controller
- 24.: Emitter
- 25.: Detector
- 26.: Emitter location
- 27.: Detector location
- 28.: Emitted light
- 29.: Backscattered light
- 30.: Plunger surface
- 31.: Chamber
- 32.: Plunger circumference
- 33.: Reception area
- 34.: Substrate
- 35.: General/central module
- 36.: Measurement module
- 37.: Temperature sensor
- 38.: Power supply
- 39.: Short range wireless
- 40.: Long range wireless
- 41.: Plunger characteristic
- 42.: Backscattering response pattern
- 43.: Covariance
- 44.: Covariance maximum
- 45.: Display

It is supposed that the present invention is not restricted to any form of realization described previously and that some modifications can be added to the presented examples and figures without reappraisal of the appended claims.

## Claims

1. A system (1) for determining a fill level within a plunger fluid container (3), which container (3) has a container wall (4) comprising an at least partly transparent material and containing a fluid (12), and which container (3) is internally provided with a plunger (10) and means for slidably advancing said plunger (10) towards an outlet end (8) of the container (3), thereby dispensing the fluid (12) from the container (3), the system (1) comprising (a) a housing (16) forming a reception area (33) for receiving the container wall (4) of a plunger fluid container (3), said reception area (33) being provided with an abutment surface (21) for abuttingly engaging said container wall (4), (b) at least one light emitter (24), (c) at least one light detector (25), and (d) a controller (23), **characterized in that** said emitter (24) and detector (25) are arranged in juxtaposition, both pointing towards the aforementioned reception area (33), whereby the detector (25) is configured for collecting backscattered light (29) stemming from the emitter (24).

2. The system (1) according to previous claim 1, **characterized in that** it comprises a plurality of emitters (24) and a plurality of detectors (25), which emitters (24) and detectors (25) are arranged in juxtaposed columns.

3. The system (1) according to previous claim 2, **characterized in that** said controller (23) is configured for separately controlling the emitters (24).

4. The system (1) according to any of the previous claims, **characterized in that** it includes a plunger lubricant container (3) for automatic lubrication.

5. The system (1) according to any of the previous claims, **characterized in that** it further comprises a fastening means (13) for mounting the housing (16) onto the container (3).

6. The system (1) according to any of the previous claims, **characterized in that** the abutment surface (21) comprises a sealing means (22).

7. The system (1) according to any of the previous claims, **characterized in that** it further comprises a temperature sensor (37).

8. The system (1) according to any of the previous claims, **characterized in that** it comprises a general module (35) and a measurement module (36).

9. A method for determining a fill level within a plunger fluid container (3), which container (3) has an at least partly transparent container wall (4) containing a fluid (12), and which container (3) is internally provided with a plunger (10), the method comprising (a) emitting light (28) from an external emitter location (26) towards the container wall (4), (b) collecting a light response thereof at one or more, external detector locations (27), and (c) assessing from said light response or responses whether the plunger (10) is substantially aligned with said detector (27) and/or emitter locations (26), **characterized in that** the emitter (26) and detector locations (27) are arranged in juxtaposition, whereby said light response comprises backscattered light (29) stemming from the emitter (24).

10. The method according to previous claim 9, **characterized in that** light (28) is emitted from a plurality of emitter locations (26), thereby collecting backscattered light (29) at a plurality of detector locations (27) juxtaposed thereto.

11. The method according to previous claim 10, **characterized in that** said fill level is determined through correlation with a plunger characteristic (41).

12. The method according to any of claims 9-11, **characterized in that** light (28) is sequentially emitted from a plurality of separate emitter locations (26).

13. The method according to any of claims 9-12, **characterized in that** a background measurement is performed.

14. The method according to any of claims9-13, **characterized in that** the fill level is determined, based upon an analogue value of said light response or responses.

15. The method according to any of claims9-14, **characterized in that** the container (3) is a plunger lubricant container (3) for automatic lubrication.
